Europäisches Patentamt

European Patent Office

Office européen des brevets

(19)

(11) Publication number: **0 145 201**

A1

(12) **EUROPEAN PATENT APPLICATION**

(21) Application number: 84307347.9

(22) Date of filing: 25.10.84

(51) Int. Cl.⁴: **G 02 B 1/10**
C 03 C 17/34, H 01 J 5/16
H 01 J 29/28, H 01 J 29/89
C 23 C 14/18, C 23 C 14/06

(30) Priority: 10.11.83 US 550930

(43) Date of publication of application:
19.06.85 Bulletin 85/25

(84) Designated Contracting States:
AT BE CH DE FR GB IT LI LU NL SE

(71) Applicant: OPTICAL COATING LABORATORY, INC.
2789 Northpoint Parkway
Santa Rosa, CA 95401(US)

(72) Inventor: Saulsbury, Steven J.
5424 Melita Road
Santa Rosa California 95405(US)

(74) Representative: Bayliss, Geoffrey Cyril et al,
BOULT, WADE & TENNANT 27 Furnival Street
London EC4A 1PQ(GB)

(54) Antireflection optical coating with antistatic properties.

(57) An antistatic antireflection optical coating (19) has a composite high index of refraction layer (19B) including a thin layer of a high index conductive material such as indium-tin oxide representing less than 25% of the optical thickness of the composite high index layer. This coating is useful in preventing static change effects on face panels of cathode ray tubes.

FIG. I

EP 0 145 201 A1

0145201

-1-

# ANTIREFLECTION OPTICAL COATING WITH
## ANTISTATIC PROPERTIES

This invention relates generally to multilayer optical coatings having antireflection properties and more specifically to multilayer optical coatings having combined antireflection and antistatic properties. This invention also relates to a cathode ray tube assembly having an antireflection optical coating on a front viewing surface thereof and, in particular, a cathode ray tube assembly having an antireflection coating with antistatic properties formed directly on the face panel viewing surface.

The provision of an antireflection coating on the viewing surface of a cathode ray tube improves the viewability of the display by substantially reducing the amount of ambient light reflected back to the viewer. High quality antireflection optical coating designs have been available for a number of years and dramatically improve the visual performance of the cathode ray tube display.

One of the problems that is encountered in cathode ray tube display devices is the inducement of a static charge on the front surface of the face panel of the cathode ray tube when the tube is turned on. The power supply associated with the cathode ray tube typically applies a fairly high voltage between the electron gun and the aluminum backing layer for the layer of phosphor on the inside of the face panel. This high voltage may be in the range of 15 to 25 kilovolts. The high voltage on the interior of the face panel induces a polarization in the dielectric material of the face panel which results in a substantial positive voltage being present at the surface of the face panel. This positive voltage is typically at a value of about one-half of the positive voltage applied to the phosphor layer on the inside of the tube.

The presence of this positive voltage on the surface of the face panel produces a static discharge if a person places a finger on or near the face panel surface. This relatively high voltage static charge also tends to ionize the air in the immediate vicinity producing a corona region in front of the tube which may be felt by an operator working with the equipment and having his or her face within 18 to 24 inches of the face panel.

This static charge exists on a bare face panel and also exists, but perhaps to a lesser degree, on a face panel of a cathode ray tube to which a separate glass panel has been bonded with the separate glass panel having an antireflection optical coating formed thereon.

The static discharges which are produced by the induced voltage on the face panel surface may cause uncomfortable static electrical shocks to a person touching the front surface of the panel. In addition, the corona region in front of the tube may contribute to operator fatigue or discomfort in situations where the operator sits with his or her face close to the screen.

It is an object of this invention to provide an antireflection optical coating which includes a conductive transparent layer of material which can be grounded to avoid build-up of charge on the surface of the optical coating.

One aspect of this invention features an optical article which includes a transparent substrate and an optical coating formed on one surface of the substrate on the side of radiation incident thereon. The optical coating has an antireflection optical response to the incident radiation and comprises a first thin layer of transparent material having low electrical conductivity and low index of refraction, a second thin film layer of transparent material having low electrical conductivity and high index of refraction and a third layer of transparent material having substantial electrical conductivity and high index of refraction. The third layer is positioned beneath the top surface of the optical coating and has at least one surface thereof adjacent the layer of high refractive index material so that the transparent conductive layer cooperates with the other layer of high index material as part of the antireflection optical coating design. In one embodiment the layer of conductive transparent material lies between the first low index layer of material and the second high index layer of material. In another embodiment the high refractive index conductive layer is sandwiched between two high index non-conductive layers to form an overall high index composite layer for the antireflection coating design.

In accordance with this invention the transparent conductive layer in the antireflection coating has an optical thickness which is less than about 25% of the total optical thickness of the composite high index layer. Preferably the transparent conductive layer has an optical thickness which is about 10% to 15% of the total optical thickness of the composite high index layer of the antireflection coating.

Thus the invention to provide an antireflection coating having antistatic properties due to a thin conductive layer incorporated in the coating without substantially degrading the optical performance of the antireflection coating.

Using a transparent conductive layer in the antireflection optical coating having an optical thickness of 10 to 15% of the total high index layer provides a conductive layer having a sheet resistivity in the range of 500 ohms per square to 5,000 ohms per square. Use of this conductive layer thickness enables antistatic performance of the antireflection coating to be achieved with virtually no sacrifice in optical performance of the coating.

In EU-A-0101033 it has been proposed to provide a conductive antireflection coating by replacing a portion of the low index layer at the surface of the coating with a thin layer of conductive transparent high index material such as indium-tin oxide. This approach to a conductive antireflection coating is satisfactory in certain product applications where high image quality and good uniform optical characteristics of the antireflection coating are not required.

However, it has certain limitations which render it undesirable for use as an antireflection coating on a cathode ray tube face panel.

To avoid degrading the optical performance of the antireflection coating in the design disclosed in EU-A-0101033, the layer of high index transparent conductive material at the surface must be made fairly thin. The resistivity of such a thin layer may be too high to provide good antistatic properties for the antireflection coating in a cathode ray tube face panel application. Furthermore, the spectral performance of an antireflection coating of that design is not sufficiently uniform and repeatable to be of acceptable quality for a display cathode ray tube. Thin Layers of transparent conductive coatings such as indium-tin oxide are inhomogeneous and tend to have substantial differences in index of refraction values from one area of the coating layer to another. These differences in index of refraction would create substantial differences in overall ambient light reflectivity across the coating area if applied in a cathode ray tube display environment. From a visual standpoint such reflectivity differences would not be acceptable performance. Also a layer of indium-tin oxide at the unprotected surface of the coating tends to degrade in conductivity with time, thus limiting its useful life.

It has been discovered in accordance with this invention that a conductive transparent layer of high index material can be utilized within the interior of the antireflection coating to replace a portion of the high index non-conductive layer without any substantial degradation in the optical performance of the coating. Electrical contact to the conductive layer for grounding purposes can readily be achieved, for example, by

-6- 0145201

appropriate masking techniques which leave areas of the conductive layer uncovered by subsequently deposited, overlying layers of the overall antireflection coating.

The following is a detailed description of some embodiments of the invention reference being made to the accompanying drawings in which:

Fig. 1 is a schematic representation of a conductive antireflection coating in accordance with this invention formed on a separate panel bonded to an image display tube.

Fig. 2 is a schematic view of a image display tube incorporating a conductive antireflection coating in accordance with this invention.

Fig. 3 is a fragmented section view of a non-conductive antireflection optical coating of the V-coat type.

Fig. 4 is a fragmented section view of a non-conductive antireflection optical coating of the wideband type.

Fig. 5 is a fragmented section view of an optical article having a conductive antireflection coating in accordance with one embodiment of this invention.

Fig. 6 is a fragmented section view of an optical article which incorporates a conductive antireflection coating in accordance with a second embodiment of this invention.

Fig. 7 is a fragmented section view of an optical article incorporating a conductive antireflection coating in accordance with a third embodiment of this invention.

Fig. 8 is a graph illustrating the optical coating performance of the non-conductive antireflection coatings depicted in Figs. 3 and 4.

Fig. 9 is a graph of the optical performance of the embodiments of this invention depicted in Figs. 5 and 6.

Fig. 10 is a graph of the optical performance of an embodiment of this invention as depicted in Fig. 7.

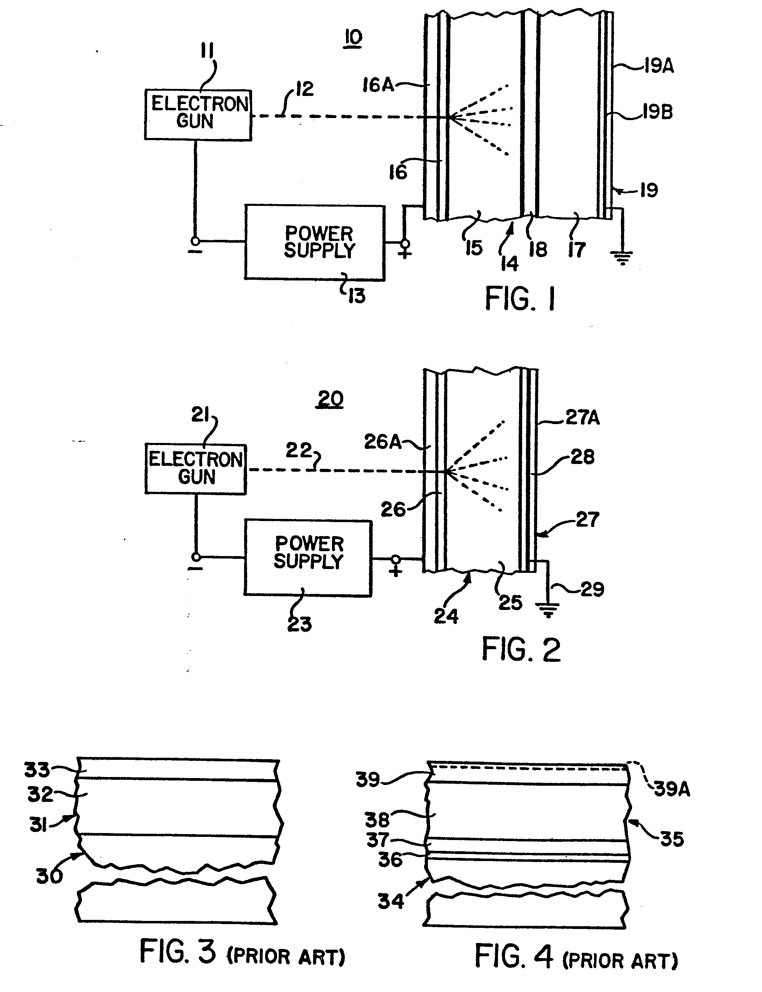

Fig. 1 illustrates the use of an antistatic antireflection optical coating on a separate panel which is bonded to the face panel of a cathode ray tube. For purposes of this application the terms conductive antireflection coating and antistatic antireflection coating refer to the same type of optical coating. The cathode ray tube assembly 10 includes a face panel arrangement 14 which comprises the face panel 15 of the cathode ray tube itself and a separate antireflection coated panel 17 cemented to the front surface of the face panel 15 with a heat cured epoxy resin adhesive layer 18. An antistatic antireflection optical coating 19 is formed on the front surface of the antireflection panel 17.

The electron gun 11 of the cathode ray tube 10 creates a beam of electrons 12 which are accelerated by the high positive voltage applied between the electron gun 11 and the aluminum layer 16A by the power supply 13. The electron beam 12 strikes the phosphor layer 16 and emits light. In a monochrome display the power supply 13 may apply a voltage of 10,000 to 15,000 volts to the aluminum backing layer 16A and in a color display tube the voltage may be up to 25,000 volts. This high voltage polarizes the dielectric materials of the panels 15 and 17 and thus tends to induce a static positive voltage on the surface of the panel 17.

In accordance with this invention, the antireflection coating 19 includes a thin conductive layer 19B which is buried within the optical coating and is connected to ground. This ground plane terminates the electric field intensity of the high voltage source at or close to ground potential across the face of the tube so that static discharge and corona build-up in front of the tube will not occur. In addition, the porous nature and thinness of the optical coating layers between the surface of the antireflection coating 19 and the conductive layer buried within the coating permits any surface charge due to rubbing of the surface of the coating or other environmental conditions to bleed through the surface coating layers into the conductive layer which is connected to ground. This precludes any substantial charge build-up on the surface of the coating.

Fig. 2 illustrates the employment of an antistatic antireflection coating directly on the front surface of a face panel utilizing a coating design in accordance with this invention. In the cathode ray tube depicted in Fig. 2, the electron gun 21 emits a beam of electrons 22 which are accelerated by the high positive voltage applied to aluminum layer 26A to strike phosphor layer 26 and be converted into light. The electron beam is scanned and modulated using well-known techniques to produce an overall two dimensional display.

Face panel 24 of the cathode ray tube includes transparent glass panel 25 and an antireflection antistatic optical coating 27 having one of the coating designs in accordance with this invention, including a thin transparent conductive layer 28 which is buried within the coating. The transparent conductive layer 28 is connected to a ground terminal 29 thus forming a ground plane between the high voltage applied to the phosphor layer 26 and the front surface 27A of the antireflection coating 27. The presence of this ground plane produces the same result as described above in connection with the Fig. 1 embodiment.

There are various types of antireflection optical coating designs which may employ the principles of this invention. The invention is applicable to any antireflection coating design which utilizes as the top two layers a low index of refraction layer having substantially a quarter wave optical thickness and a layer of high index of refraction material having substantially a half wave optical thickness. The quarter wave and half wave thicknesses are approximate and at any particular design may vary from an exact quarter or half wave layer depending upon the overall nature of the design.

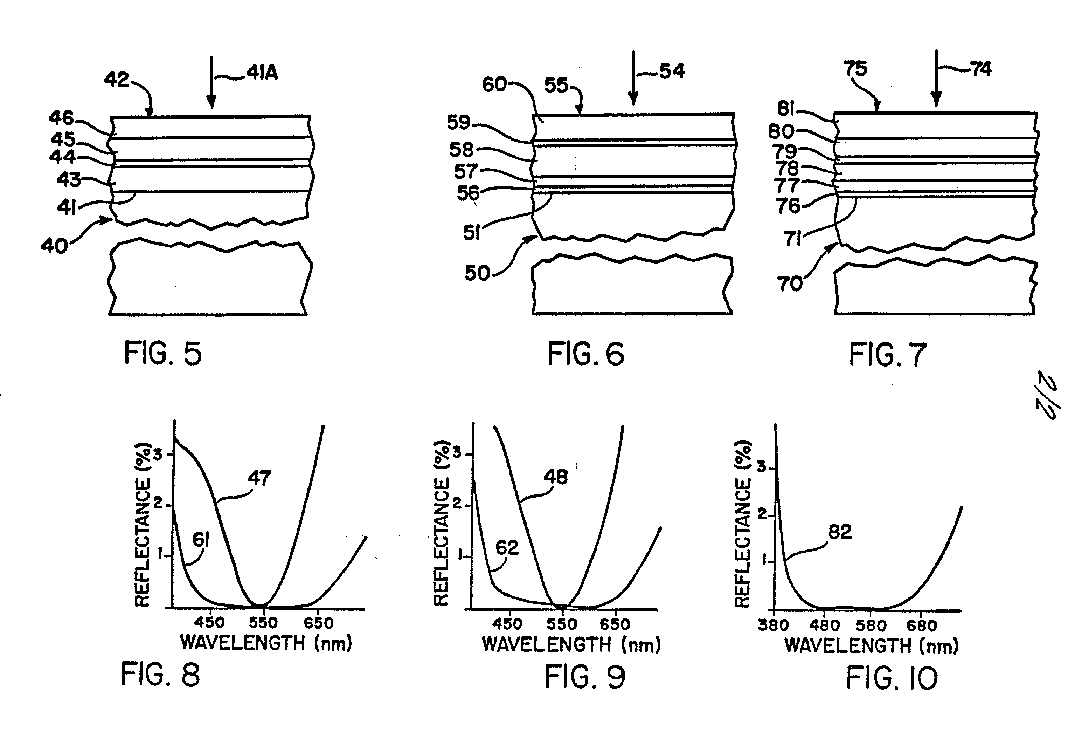

In standard non-conductive antireflection coatings, the low index layer and the high index layer are both formed of transparent non-conductive material. Figs. 3 and 4 show two types of antireflection optical coatings of standard prior art design. Fig. 3 shows a transparent substrate 30 having a non-conductive antireflection optical coating 31 formed thereon and comprising a half wave high index layer 32 and a quarter wave low index layer 33. This is commonly called a two-layer V-coat design. The material of the high refractive index layer 32 may, for example, be titanium dioxide (index of refraction of about 2.1) or mixtures of titanium and rare earth oxides (index of refraction in the range of 2.0-2.2). The low index of refraction layer 33 is preferably magnesium flouride (index of refraction 1.38), but silicon dioxide (index of refraction 1.46) could also be used with some degradation in spectral performance. Table I below gives a specific example of design parameters for a prior art V-coat antireflection optical coating. The low index material "L" is magnesium fluoride. The high index material "H" is mixed titanium and rare earth oxide. Q.W.O.T. stands for the wavelength for which the physical layer thickness has a quarter wave optical thickness. The graph 47 shown in Fig. 8 illustrates the antireflection optical performance of the coating of Table I.

TABLE I

| Layer | Material | Index of Refraction | Physical Thickness (nanometers) | Q.W.O.T. |
|---|---|---|---|---|
| 33 | L | 1.38 | 73 | 403 |
| 32 | H | 2.06 | 115 | 949 |

| | |
|---|---|
| Substrate Index | 1.52 (Glass) |
| Incident Medium | 1.00 (Air) |
| Match Wavelength | 550 |
| Match Angle | 0.0 |
| Defined in Medium | 1.00 |

Fig. 4 illustrates the structure of a wide band antireflection optical coating of the standard prior art type. As shown in Fig. 4, an optical coating 35 is formed on the transparent substrate 34. The optical coating 35 consists of a thin high index layer 36 followed by a thin low index layer 37, then a half wave high index layer 38 and a quarter wave low index layer 39. The layer designated in dashed lines with the reference number 39A represents the prior art Hahn et al. approach of providing a thin conductive high index layer on the surface of the optical coating replacing a fraction of the low index layer 39 to achieve antistatic coating properties. An example of coating design parameters for a wide band antireflection coating as shown in Fig. 4 is given in Table II below. The same high and low index non-conductive materials may be utilized in the optical coating of Fig. 4 as in the Fig. 3 coating. The graph 61 shown in Fig. 8 illustrates the optical performance of a broad band antireflection coating having a design in accordance with Table II below. The optical performance of the wide band coating is generally preferred for image tube applications.

TABLE II

| Layer | Material | Index of Refraction | Physical Thickness (nanometers) | Q.W.O.T. |
|-------|----------|---------------------|----------------------------------|----------|
| 39    | L        | 1.38                | 93                               | 516      |
| 38    | H        | 2.06                | 127                              | 1049     |
| 37    | L        | 1.38                | 29                               | 161      |
| 36    | H        | 2.06                | 14                               | 123      |

| | |
|---|---|
| Substrate Index | 1.52 |
| Incident Medium | 1.00 |
| Match Wavelength | 550 |
| Match Angle | 0.0 |
| Defined in Medium | 1.00 |

In accordance with the general principles of this invention, an antistatic antireflection coating is formed by replacing a portion of the half wave high index layer of non-conductive material with a transparent conductive coating material. Preferably to avoid substantial degradation of the optical performance of the antireflection coating, less than about 25% of the total thickness of high index half wave layer is formed from the conductive transparent material. Furthermore, if the electrical conductivity of the transparent conductive layer is satisfactory at layer thicknesses less than 25% of the total optical thickness of this high index portion of the coating, it is preferably to maintain the high index conductive layer in the range of 10% to 15% of the total thickness of the half wave high index layer.

The reason for maintaining the high index conductive layer as a relatively small fraction of the total high index half wave layer is that transparent conductive materials are less homogeneous than are high index dielectric materials normally used for half wave high index layers in an antireflection coating. In other words, the refractive index of the conductive material layer may vary both from one layer deposition to another and across the surface of a single deposited layer. By maintaining the optical thickness of the conductive layer a relatively small fraction of the total optical thickness of the half wave layer, errors and discrepancies in the conductive material layer will tend to have a minimal effect on the overall quality of the optical performance of the antireflection coating. If, for example, the conductive layer is 10% of the total half wave composite high index layer, a 20% error in the conductive layer produces only a 2% overall error in the high index composite layer.

The high index transparent conductive layer utilized in this invention is preferably the well known indium-tin oxide material which is widely used in opto-electronic devices. Other transparent conductive materials which may be utilized are, for example, tin oxide and cadmium stannate. Utilizing indium-tin oxide as the conductive transparent layer, results in a conductive layer typically having sheet resistivity of about 150-5,000 ohms per square when the layer is made to be 25% of the thickness of the half wave composite high index layer. If the indium-tin oxide layer is formed to about 10% to 15% of the total half wave high index composite layer, the sheet resistivity of the layer is typically in the range of about 500 ohms per square to 5,000 ohms per square. Other transparent conductive materials will produce conductive layers of different resistivity depending on the inherent conductivity of the material itself. Sheet resistivity is a standard measurement for a thin film conductive layer. The higher the value of sheet resistivity the lower the electrical conductivity of the layer.

Fig. 5 depicts an antireflection coating 42 on the surface 41 of a transparent substrate 40 with the antireflection coating 42 on the side of incidence of ambient light on the substrate 40 as indicated by the arrow 41A. The antireflection optical coating 42 has a V-coat design. The conductive antireflection coating 42 comprises a layer 43 of high index non-conductive material formed initially on the surface 41 of substrate 40. On this first layer 43 of non-conductive material is formed a layer 44 of high index conductive material, followed by another layer 45 of non-conductive high index material. Finally, a low index non-conductive layer 46 is formed as the final coating layer. The three high index layers 43, 44 and 45 form a composite high index half wave layer for the antireflection coating. It should be understood that the conductive high index layer 37 may be positioned at any point between layers of non-conductive high index material (i.e. it needn't be in the middle of two equally thick layers). Alternatively, layer 37 may be placed at the interface between the high index material and the low index material.

The reflectance verses wavelength curve 47 depicted in Fig. 8 represents the optical performance of the prior art V-coat antireflection optical coat depicted in Fig. 3 and having the coating design parameters set forth in Table 1 below. The reflectance verses wavelength curve 41 depicted in Fig. 9 represents the optical performance of the conductive antireflection coating of the type shown in Fig. 5 and having the specific coating design parameters set forth in Table III below. Comparing the curve 48 in Fig. 9 with the curve 47 in Fig. 8, it can be seen that the conductive antireflection coating shown in Fig. 5 has, for practical purposes, the same optical performance as the prior art antireflection coating shown in Fig. 3.

Fig. 6 depicts one embodiment of a wide band conductive antireflection coating in accordance with this invention. As shown in Fig. 6 optical coating 55 is formed on surface 51 of substrate 50 on the side of incident ambient light designated by the arrow 54. In this case the optical coating 55 comprises five thin film layers 56-60. The thin film layers 56 and 57 are respective high and low index material layers corresponding to the layers 36 and 37 in the prior art coating of Fig. 4. Layer 58 is a high index non-conductive layer and layer 59 is a conductive high index layer. Thus layers 58 and 59 form a composite high index layer designed to have substantially the same optical characteristics, i.e., optical thickness, of the high index layer 38 in the prior art coating of Fig. 4. Layer 60 is a layer of low index material having the same optical characteristics of the low index layer 39 in the coating of Fig. 4.

## TABLE III

| Layer | Material | Index of Refraction | Physical Thickness (nanometers) | Q.W.O.T. |
|-------|----------|---------------------|---------------------------------|----------|
| 46 | L | 1.38 | 73 | 403 |
| 45 | H | 2.06 | 51 | 425 |
| 44 | ITO | 2.00 | 12 | 100 |
| 43 | H | 2.06 | 52 | 425 |

| | |
|---|---|
| Substrate Index | 1.52 |
| Incident Medium | 1.00 |
| Match Wavelength | 550 |
| Match Angle | 0.0 |
| Defined in Medium | 1.00 |

The reflectance verses wavelength characteristics of the coating 35 in Fig. 4 are depicted in the graph 61 in Fig. 8. Correspondingly, the reflectance verses wavelength characteristics of the optical coating 55 in Fig. 6 are depicted as curve 62 in Fig. 9 where the coating has the design parameters set forth in Table IV below. Comparing the curve 62 and 61, it can be seen that the antireflection optical performance of the coating 55 is, for practical purposes, the same as the

.antireflection performance shown by the curve 61 before the coating 35 in Fig. 4. While there is some minor degradation in the optical performance of the coating 55 in accordance with this invention, in practice the variation would not be discernable from a side-by-side visual comparison of the two coatings.

Fig. 5 depicts another embodiment of a conductive antireflection coating in accordance with this invention. The optical coating 75 formed on the surface 71 of substrate 70 has the same general design characteristics as the prior art coating 35 in Fig. 4. However, in this instance the optical coating 75 is comprised of six separate optical coating layers 76-81. The coating layer 76 and 77 are respective high and low index layers corresponding identically to the high and low index layers 36 and 37 in the prior art coating 35. Coating layer 78, 79 and 80 are all high index layers with layer 78 and 80 being high index non-conductive layers and layer 79 being a high-index conductive layer. Thus, in this embodiment, the high-index conductive layer is sandwiched between two high-index non-conductive layers to form the composite high index layer.

TABLE IV

| Layer | Material | Index of Refraction | Physical Thickness (nanometers) | Q.W.O.T. |
|-------|----------|---------------------|----------------------------------|----------|
| 60 | L | 1.38 | 92 | 508 |
| 59 | ITO | 2.00 | 12 | 95 |
| 58 | H | 2.06 | 116 | 954 |
| 57 | L | 1.38 | 29 | 159 |
| 56 | H | 2.06 | 15 | 121 |

Substrate Index    1.52
Incident Medium    1.00
Match Wavelength   550
Match Angle        0.0
Defined in Medium  1.00

Table V below gives an example of coating design parameters for optical coating 75. The reflectance verses wavelength performance of the optical coating specified in Table V is shown as curve 82 in Fig. 10. Comparing the curve 82 in Fig. 10 with the curve 61 in Fig. 8, it is seen that the optical performance of the antireflection antistatic coating 75 is, for practical purposes, the same as the optical coating performance of the coating 35 as shown in Fig. 4. While there has been some degradation of the coating performance due to the introduction of the conductive antireflection layer into

TABLE V

| Layer | Material | Index of Refraction | Physical Thickness (nanometers) | Q.W.O.T. |
|-------|----------|---------------------|--------------------------------|----------|
| 81 | L | 1.38 | 94 | 518 |
| 80 | H | 2.06 | 58 | 477 |
| 79 | ITO | 2.00 | 12 | 95 |
| 78 | H | 2.06 | 58 | 477 |
| 77 | L | 1.38 | 29 | 161 |
| 76 | H | 2.06 | 15 | 123 |

| | |
|---|---|
| Substrate Index | 1.52 |
| Incident Medium | 1.00 |
| Match Wavelength | 550 |
| Match Angle | 0.0 |
| Defined in Medium | 1.00 |

the composite high index structure of the coating 75, a side-by-side visual comparison of the two coatings would not show any visually discernable differences therebetween.

It should be understood that other antireflection coating designs could utilize the principles of this invention and the invention may be applied in areas other than antireflection coatings for display tubes. While various embodiments of the invention have been disclosed, it should be understood that other design variations may be used by persons skilled in the art without departing from the scope of the invention as claimed.

WHAT IS CLAIMED IS:

1. In an optical article, a transparent substrate having two major surfaces, and an optical coating formed on one of said two major surfaces on the side of incident radiation and having an antireflection optical coating comprising a first thin film layer of transparent dielectric material having low index of refraction, a second thin film layer of transparent dielectric material having high index of refraction, and a third layer of transparent material having substantial electrical conductivity and high index of refraction, said third layer being positioned beneath the top surface of said optical coating with at least one surface thereof adjacent said layer of high refractive index material.

2. The optical article of Claim 1, wherein said third layer of transparent material lies between said first and second layers.

3. The optical article of Claim 1, further comprising a fourth thin film layer of transparent dielectric material having high index of refraction, said third layer of transparent material being formed between said second and fourth layers.

4. The optical article of Claim 2, wherein the optical thickness of said third layer is less than about twenty-five percent of the total optical thickness of said second and third layers.

5. The optical article of Claim 3, wherein the optical thickness of said third layer is less than about twenty-five percent of the total optical thickness of said second, third and fourth layers.

6.    In an optical article, a transparent substrate having two major surfaces, and an optical coating formed on one of said two major surfaces on the side of incident radiation and having an antireflection optical response to said incident radiation, said optical coating comprising a first thin film layer on the side of incident radiation and formed of a transparent dielectric material having low index of refraction, and a composite thin film layer adjacent said first thin film layer and formed from a plurality of layers of transparent material having high index of refraction including at least one layer of a dielectric material and at least one layer of transparent material having substantial electrical conductivity.

7.    The optical article of Claim 6, wherein the optical thickness of said layer of material having substantial electrical conductivity is less than twenty-five percent of the total optical thickness of said composite thin film layer.

8.    The optical article of Claim 6 or Claim 7, wherein said layer of material having substantial electrical conductivity is formed in contact with said first thin film layer.

9.    The optical article of any of Claims 6 to 8, wherein said composite thin film layer comprises two layers of said dielectric material and said layer of material having substantial electrical conductivity is formed between said two separate layers.

10.   A cathode ray tube having a face panel arrangement with an electron sensitive light emitting phosphor on an interior surface thereof and an antireflection optical coating formed on a front exterior surface thereof, said optical coating comprising a first thin film layer on the side of said incident radiation and formed of a transparent dielectric material having low index of refraction, and a composite thin film layer adjacent said first thin film layer and formed from a plurality of layers including at least one layer of a dielectric material and at least one layer of transparent material having substantial electrical conductivity, said layer of material having substantial electrical conductivity being adapted to be connected to an electrical ground to prevent static charge build up on said face panel.

11. The cathode ray tube of Claim 10, wherein the optical thickness of said layer of material having substantial electrical conductivity is less than twenty-five percent of the total optical thickness of said composite thin film layer.

12. The cathode ray tube of Claim 10 or Claim 11, wherein said antireflection coating is formed directly on the face panel of said cathode ray tube.

13. The cathode ray tube of any of Claim 10 to 12 wherein said face panel arrangement comprises the face panel of said tube and a separate transparent panel bonded to the front surface of said face panel, said antireflection optical coating being formed on a front surface of said separate transparent panel.

1/2

0145201

FIG. 1

FIG. 2

FIG. 3 (PRIOR ART)

FIG. 4 (PRIOR ART)

FIG. 5

FIG. 6

FIG. 7

FIG. 8

FIG. 9

FIG. 10

0145201

**Europäisches Patentamt**

**EUROPÄISCHER RECHERCHENBERICHT**

EP 84307347.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB - A - 1 406 940 (OPTICAL COATING LABORATORY)<br><br>* Page 1, lines 12-15; page 2, line 37 - page 3, line 93; fig. 1,2 *<br><br>-- | 1,2,6, 8,9 | G 02 B 1/10<br>C 03 C 17/34<br>H 01 J 5/16<br>H 01 J 29/28<br>H 01 J 29/89<br>C 23 C 14/18<br>C 23 C 14/06 |
| A | EP - A1 - 0 007 224 (TEIJIN LIMITED)<br><br>* Abstract; page 7, lines 18-34; page 8, line 17 - page 9, line 9; page 12, line 28 - page 13, line 30 *<br><br>-- | 1,2,6, 8,9 | |
| A | US - A - 4 413 022 (SUNTOLA)<br><br>* Abstract; fig. 15; column 11, example 4 *<br><br>-- | 1,3,6 | |
| P,D, A | EP - A2 - 0 101 033 (OPTICAL COATING LABORATORY)<br><br>* Abstract; fig. 1,3,5,6; page 4, lines 6-33; page 8, line 18 - page 9, line 5; page 11, line 6 - page 12, line 35 *<br><br>---- | 1,6 | RECHERCHIERTE SACHGEBIETE (Int. Cl.4)<br><br>C 03 C<br>H 01 J<br>C 23 C<br>G 02 B |

Der vorliegende Recherchenbericht wurde für alle Patentansprüche erstellt.

| Recherchenort | Abschlußdatum der Recherche | Prüfer |
|---|---|---|
| WIEN | 12-02-1985 | HAUSWIRTH |